Europäisches Patentamt

**European Patent Office**

**Office européen des brevets**

(11) Veröffentlichungsnummer : **0 050 727**
**B1**

(12) **EUROPÄISCHE PATENTSCHRIFT**

(45) Veröffentlichungstag der Patentschrift :
04.03.87

(21) Anmeldenummer : 81106987.1

(22) Anmeldetag : 05.09.81

(51) Int. Cl.⁴ : **B 61 F 3/16, B 61 H 5/00,**
**B 61 F 5/52, B 61 F 5/16,**
**B 61 H 7/06**

(54) Drehgestell für Schienenfahrzeuge.

(30) Priorität : 18.10.80 DE 3039369

(43) Veröffentlichungstag der Anmeldung :
05.05.82 Patentblatt 82/18

(45) Bekanntmachung des Hinweises auf die Patenterteilung : 04.03.87 Patentblatt 87/10

(84) Benannte Vertragsstaaten :
AT BE CH DE FR GB IT LI

(56) Entgegenhaltungen :
CH-A- 181 944
CH-A- 372 337
CH-A- 467 186
DE-A- 2 361 734
DE-A- 2 610 054
GB-A- 556 295
GB-A- 2 050 273
US-A- 1 466 590
US-A- 2 533 639
US-A- 3 313 245
US-A- 3 946 676

(73) Patentinhaber : DUEWAG Aktiengesellschaft
Duisburger Strasse 145
D-4150 Krefeld 11 (DE)

(72) Erfinder : Braun, Otto
Inrather Strasse 298
D-4150 Krefeld (DE)
Erfinder : Frederich, Fritz, Prof. Dr.-Ing.
Brandenburger Strasse 18
D-4150 Krefeld (DE)
Erfinder : Schraut, Rolf, Dr.-Ing.
Bonhoefferstrasse 25
D-4050 Mönchengladbach 1 (DE)

Jouve, 18, rue St-Denis, 75001 Paris, France

## Beschreibung

Die Erfindung betrifft ein Drehgestell für Schienenfahrzeuge, insbesondere für hohe Geschwindigkeiten, im wesentlichen bestehend aus einem unteren verwindungsfähig gestalteten, die Lager von Radsätzen verbindenden Führungsrahmen, oberhalb dieser Lager angeordneten Federn, auf denen der Fahrzeugaufbau unter Zwischenschaltung von durch einen oberen Schwenkrahmen verbundenen Tragkörpern um eine vertikale Achse drehbar abgestützt ist, wobei zwischen dem Führungsrahmen und dem Schwenkrahmen Elemente zur Übertragung von Längs- und Querkräften angeordnet sind.

Bei einem bekannten Drehgestell (DE-A-23 61-734) mit den vorgenannten Merkmalen sind die durch den unteren Führungsrahmen verbundenen Lager der Radsätze an den Außenseiten des Drehgestelles vor dem entsprechenden Rad angeordnet. Die oberhalb dieser Lager befindlichen Federn stützen den Fahrzeugaufbau unter Zwischenschaltung der jeweils mit Laufbahnsegmenten versehenen Tragkörper ab, wobei diese Tragkörper in ihrer Verbindung durch den oberen Schwenkrahmen eine Drehkranzkonstruktion ersetzen. Als Elemente zur Übertragung von Längs- und Querkräften zwischen dem unteren Führungsrahmen und dem oberen Schwenkrahmen sind entsprechende Längslenker und Querlenker vorgesehen. Durch die obige Bauweise wird wegen der unter Verzicht auf einen herkömmlichen gewichtsaufwendigen Drehgestellrahmen erzielbaren Verringerung der Drehgestellmasse eine Entwicklungsrichtung zu einem Drehgestell für höhere Geschwindigkeiten aufgezeigt.

Der Erfindung liegt die Aufgabe zugrunde, bei einem Drehgestell der gattungsgemäßen Art mit möglichst geringem baulichen Aufwand für optimale Laufeigenschaften auch bei besonders hohen Geschwindigkeiten und für geringen Verschleiß an Rad und Schiene zu sorgen ; dafür sollen insbesondere die ungefederten Massen verkleinert und eine weitgehend momentenfreie Kraftübertragung erreicht werden.

Diese Aufgabe wird erfindungsgemäß dadurch gelöst, daß am Führungsrahmen zum Führen des Radsatzes dessen Räder jeweils mit zwei Armen gabelförmig umgreifende Halterungen befestigt sind, daß die beiden Arme jeder Halterung zur Aufnahme von Lagern für ein radfestes, sich längenmäßig nur entsprechend dem Abstand dieser Lager erstreckendes Tragteil ausgebildet sind, daß jedes Lager über eine in seiner Vertikalachse angeordnete Feder gegen den Schwenkrahmen abgestützt ist, und daß die gabelförmige Halterung über einen deren beide Arme verbindenden Gabelkopf unter Zwischenschaltung eines elastischen Verbindungselementes, beispielsweise einer Gummibuchse, an dem Führungsrahmen angeschlossen ist.

Zum Stand der Technik (DE-A-26 10 054) gehört noch ein Drehgestell, bei dem der Fahrzeugaufbau — abweichend von Gattung und Lösung des Erfindungsgegenstandes — nicht über Federn direkt auf den Lagern der Radsätze, sondern über eine Sekundärfederung (Luftfedern) und eine Primärfederung abgestützt wird. Zum Bilden der Primärfederung weist der H-förmig gestaltete Rahmen dieses bekannten Drehgestelles die Räder von Radsätzen umgreifende Halterungen auf, die jeweils zur Aufnahme von Lagern für radfeste, sich längenmäßig nur entsprechend dem Abstand dieser Lager erstreckende Tragteile ausgebildet sind, wobei jede Halterung über eine außerhalb der Lager angeordnete Feder gegen einen Querträger abgestützt ist, der sich zwischen den Enden von seitlichen Trägern des H-förmigen Rahmens erstreckt. Bei der vorbeschriebenen Bauweise werden die seitlichen Träger und die Querträger sowie die Halterungen auf Biegung beansprucht ; dies führt zu einem für die Laufeigenschaften und den Verschleiß an Rad und Schiene unerwünscht hohen Gewicht des Drehgestelles und einem großen Massenträgheitsmoment um die Drehgestell-Hochachse.

Durch die US-A-3 946 676 ist ferner ein Drehgestell bekannt, bei dem an einem blockartig gestalteten Rahmen die Räder von Radsätzen gabelförmig umgreifende und deren Lager aufnehmende Halterungen befestigt sind ; die Abstützung dieser Halterungen erfolgt über jeweils in Vertikalachse eines jeden Lagers angeordnete Federn gegen obere Seitenträger des blockartigen Rahmens, der in seinem Mittenbereich zur Aufnahme des Fahrzeugaufbaues eingerichtet ist. Auch bei diesem, gattungs- und lösungsmäßig abweichenden Drehgestell sind aufgrund von Biegemomenten ein höheres Gewicht und Massenträgheitsmoment des Drehgestelles nicht zu vermeiden.

Die mit dem Gegenstand nach der Erfindung erzielbaren Vorteile bestehen insbesondere in folgendem :

Die Begrenzung der Tragteile des Radsatzes auf den Bereich jeden Rades und die auf jeder Seite des einzelnen Rades vorgesehene Aufnahme dieser Tragteile letztlich am Schwenkrahmen erbringen vorteilhaft eine für optimale Laufeigenschaften und geringen Verschleiß wesentliche Verkleinerung der ungefederten Massen und erlauben durch die direkte weitgehend momentenfreie Kraftübertragung in den Fahrzeugaufbau eine gewichtlich günstigere Gestaltung sowohl des Führungsrahmens als auch des Schwenkrahmens. Das zwischen dem Gabelkopf der Halterung und dem Führungsrahmen angeordnete elastische Verbindungselement dient vorteilhaft der Dämpfung von Schwingungen und Geräuschen sowie der Erzielung radialer Einstellungen der Räder bei Kurvenfahrt des Drehgestelles ; überdies nimmt das elastische Verbindungselement einen Teil der beispielsweise wegen Unebenheiten der Schienenanlage auftretenden Verwindungen auf und ent-

lastet insoweit den verwindungsfähigen Führungsrahmen. Weiter günstig ist die Halterung mit ihrem die beiden Arme verbindenden Gabelkopf als einbaufertige Baugruppe herzustellen und bei abmessungsmäßig, insbesondere hinsichtlich der Spurweite, unterschiedlichen Drehgestellen verwendbar.

Als baulich kompaktere, insbesondere für die Bauhöhe und das Gewicht günstigere Alternative zu der Möglichkeit, an den Armen der Halterungen separate Lager für die Tragteile des Radsatzes zu befestigen, ist nach einer Ausgestaltung der Erfindung vorgesehen, daß die Lager für die radfesten Tragteile jeweils aus einem an den Armen der Halterungen ausgebildeten festen Gehäuseteil und aus einem lösbaren Gehäuseteil bestehen, wobei die zwischen dem festen Gehäuseteil und dem lösbaren Gehäuseteil vorhandene Trennstelle in bezug auf die vertikale Querebene des Lagers derart geneigt angeordnet ist, daß an dem festen Gehäuseteil eine Aufnahme für die in Vertikalachse des Lagers befindliche Feder anbringbar ist. Bei Wartungsarbeiten können durch einfaches Entfernen der lösbaren Gehäuseteile entweder ein gesamter Radsatz oder einzelne Räder ausgebaut werden.

Falls die den Fahrzeugaufbau abstützenden Federn Flexicoilfedern sind, empfiehlt es sich gemäß einer Weiterbildung nach der Erfindung, daß die Arme der gabelförmigen Halterung bzw. die an den Armen ausgebildeten festen Gehäuseteile der Lager mit einem eine Zentrierung für die jeweilige Flexicoilfeder erbringenden Ansatz versehen sind.

Anstelle der vorgenannten Flexicoilfedern können zur Abstützung des Fahrzeugaufbaues hydro-pneumatische Federn verwendet werden, die zugleich als Dämpfer arbeiten. Zum leichten Befestigen der hydro-pneumatischen Federn sieht ein ergänzendes Merkmal gemäß der Erfindung vor, daß die Arme der gabelförmigen Halterung bzw. die an den Armen ausgebildeten festen Gehäuseteile der Lager einen gabelförmigen Ansatz zum Befestigen eines Lagerauges der jeweiligen hydro-pneumatischen Feder aufweisen.

Um mit besonders kleinem baulichen Aufwand das Drehgestell mit einem Bremssystem ausrüsten zu können, besteht eine nächste Ausführungsform der Erfindung darin, daß die gabelförmige Halterung zur Aufnahme einer an dem entsprechenden Rad angreifenden Scheibenbremsanordnung ausgebildet ist.

Die vorgenannte Aufnahme erfolgt in erfindungsgemäßer Weiterbildung dadurch, daß an dem Gabelkopf der Halterung eine Lagerstelle als Festpunkt für ein im Bereich der Horizontalachse des Rades angreifendes Zangenbremspaar angeordnet ist, wobei die Arme der Halterung jeweils mit einer dem Durchtritt und der Abstützung des Zangenbremspaares dienenden Ausnehmung versehen sind.

Für eine rationelle Fertigung und eine im Sinne von Verwindungsfähigkeit bewegliche Gestaltung des Führungsrahmens liegt es ferner im Wesen der Erfindung, daß der Führungsrahmen aus zwei winkelförmig ausgelegten, untereinander gleichen Rahmenteilen besteht, die über entsprechend der geforderten Verwindungsfähigkeit gestaltete Gelenke miteinander verbunden sind.

Vor allem im Hinblick auf eine von der Beanspruchung und vom Gewicht her besonders günstige Auslegung des Schwenkrahmens ist gemäß einem weiteren Merkmal der Erfindung vorgesehen, daß die Tragkörper in Vertikalachse einer jeden Feder angeordnet sind.

In ergänzender Ausgestaltung der Erfindung sind zwischen dem Fahrzeugaufbau und den Tragkörpern jeweils gummigefederte Zwischenstücke angeordnet, wobei diese Zwischenstücke gemäß einem nächsten Erfindungsmerkmal segmentförmig ausgeführt sind.

Für eine weitere Verkleinerung der ungefederten Massen des Drehgestelles ist gemäß einer Ausführungsform nach der Erfindung vorgesehen, daß an dem Schwenkrahmen in Dreipunkt-Anordnung Hydraulikzylinder zur höhenverstellbaren Aufhängung von miteinander verbundenen Schienenbremskörpern angelenkt sind.

Um in einfacher Weise eine besonders stabile, sichere Aufhängung der Schienenbremskörper zu erreichen, liegt es ferner im Wesen der Erfindung, daß jeder Schienenbremskörper in einem am Führungsrahmen angeschlossenen Übertragungsteil für die auftretenden Bremskräfte höhenverschiebbar geführt ist, wobei das Übertragungsteil als Abreißsicherung für den Schienenbremskörper ausgebildet ist.

Um bei Radsätzen übliche durchgehende Radsatzwellen mit beträchtlichem Gewicht im Sinne der leichten Bauweise ersetzen zu können, ist gemäß einer weiteren Ausgestaltung der Erfindung vorgesehen, daß die Tragteile an ihren zur Drehgestellängsmitte hin weisenden Enden für den Anschluß eines gegenseitigen Verbindungsstückes, z. B. eines dünnwandigen Distanzrohres, Getriebes oder einer Bremse, eingerichtet sind. Diese Ausgestaltung ermöglicht außerdem die einem Baukastenprinzip entsprechende Ausrüstung des Drehgestelles, beispielsweise als Lauf- oder Triebdrehgestell oder mit einem für hohe Geschwindigkeiten gewünschten zusätzlichen Bremssystem.

Ausführungsbeispiele der Erfindung sind in der Zeichnung prinzipartig dargestellt und werden im folgenden näher beschrieben. Es zeigen :

Figur 1 ein Drehgestell in der Draufsicht, wobei die rechte Bildhälfte eine tiefer liegende Ebene wiedergibt,

Figur 2 und Figur 3 Seitenansichten zu dem Drehgestell nach Fig. 1,

Figur 4 ein anderes Drehgestell in der Draufsicht, ebenfalls auf zwei Ebenen,

Figur 5 und Figur 6 Seitenansichten des Drehgestelles nach Fig. 4,

Figur 7 und Figur 8 die Ansichten nach Fig. 3 bzw. Fig. 6 ergänzende Schnitte, vereinfacht dargestellt.

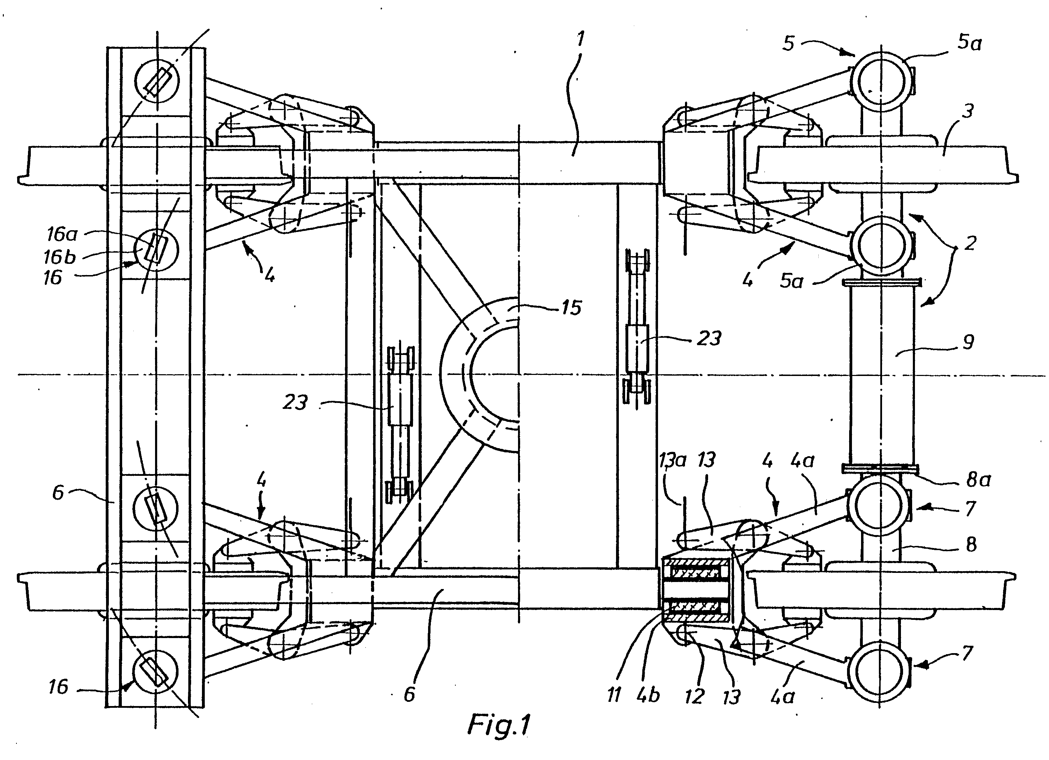

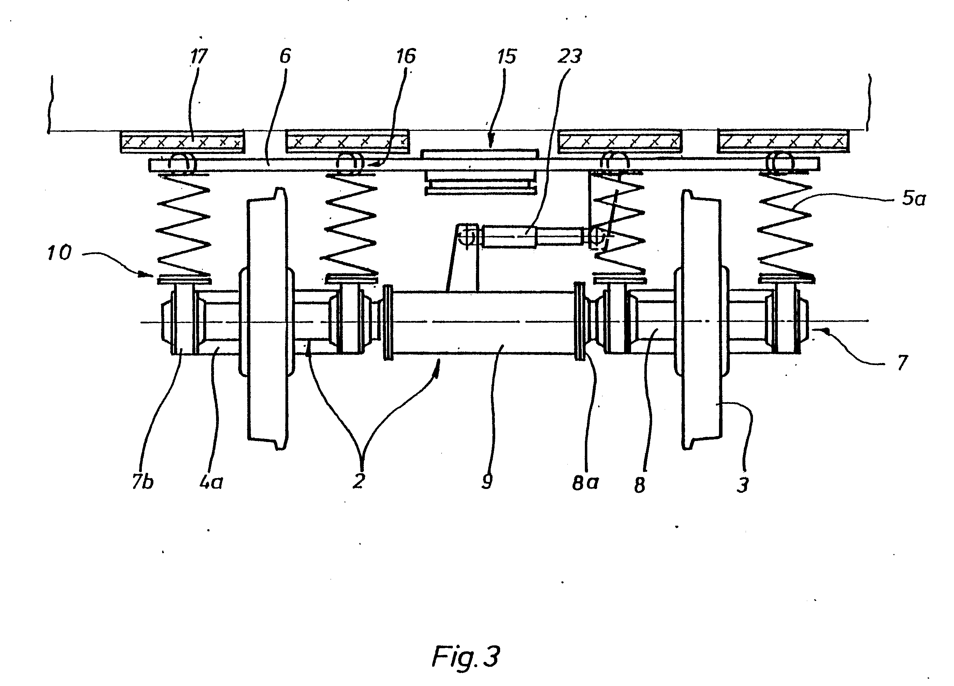

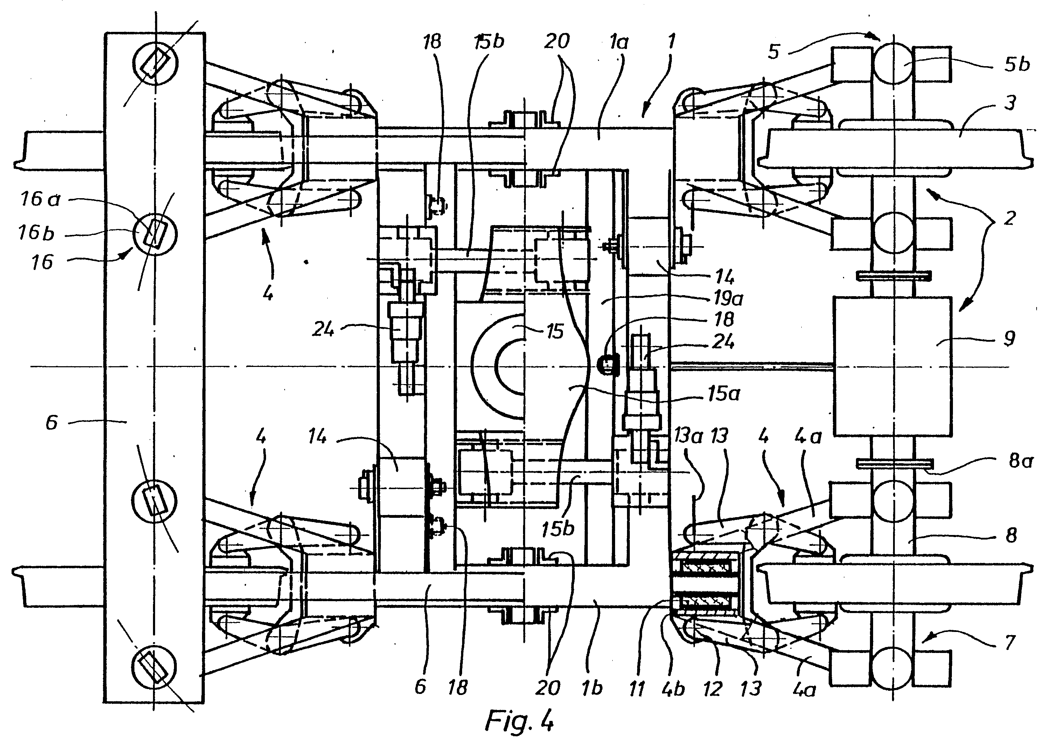

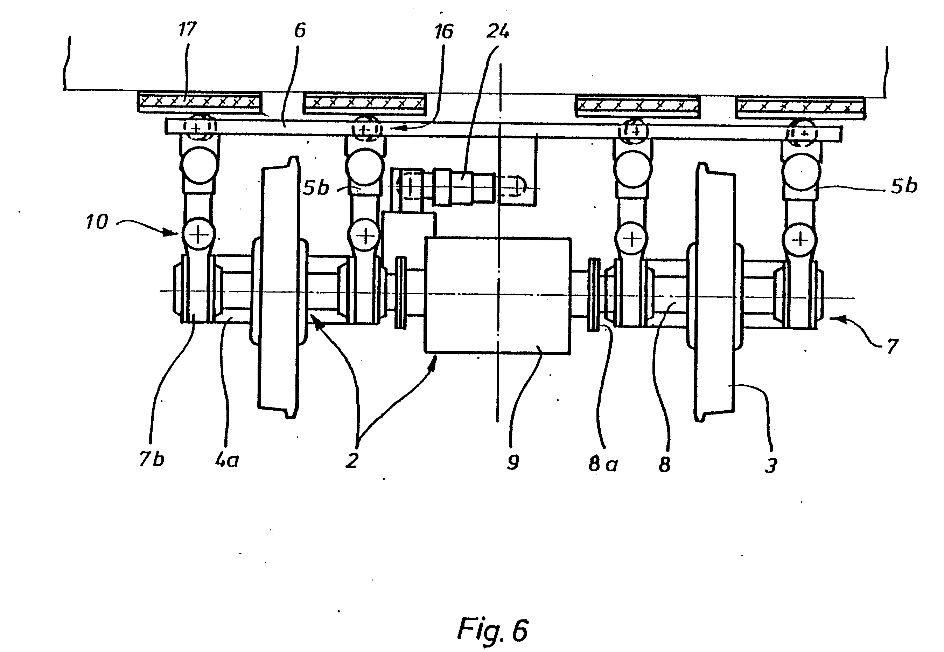

Die gezeigten Drehgestelle enthalten jeweils einen unteren verwindungsfähig gestalteten Führungsrahmen 1. Nach Fig. 4 besteht ein solcher Führungsrahmen 1 aus zwei winkelförmigen Rahmenteilen 1a und 1b, die über Gelenke 14 miteinander verbunden sind. An jedem Führungsrahmen 1 sind gabelförmige, die Räder 3 von Radsätzen 2 umgreifende Halterungen 4 angeschlossen, wobei dieser Anschluß über einen die beiden Arme 4a jeder Halterung 4 verbindenden Gabelkopf 4b und unter Zwischenschaltung eines elastischen Verbindungselementes 11 erfolgt. Die beiden Arme 4a einer Halterung 4, die jeweils als zweiteiliges Gehäuse — festes Gehäuseteil 7a, lösbares Gehäuseteil 7b — eines Lagers 7 ausgebildet sind, nehmen in den Lagern 7 ein radfestes Tragteil 8 auf, das sich längenmäßig nur entsprechend dem Abstand dieser Lager 7 erstreckt. Die Tragteile 8 eines Radsatzes 2 sind an ihren zur Drehgestellängsmitte hin weisenden Enden 8a für den Anschluß eines gegenseitigen Verbindungsstückes 9, beispielsweise eines dünnwandigen Distanzrohres (siehe Fig. 1 und 3) oder eines Getriebes, einer Bremse (siehe Fig. 4 und 6), eingerichtet.

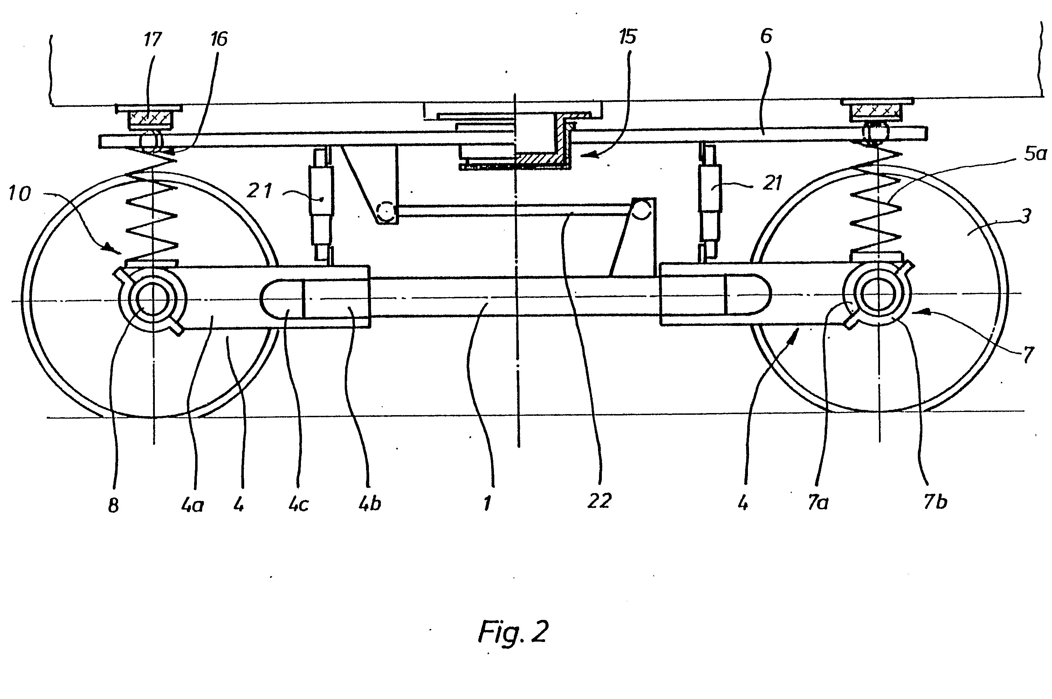

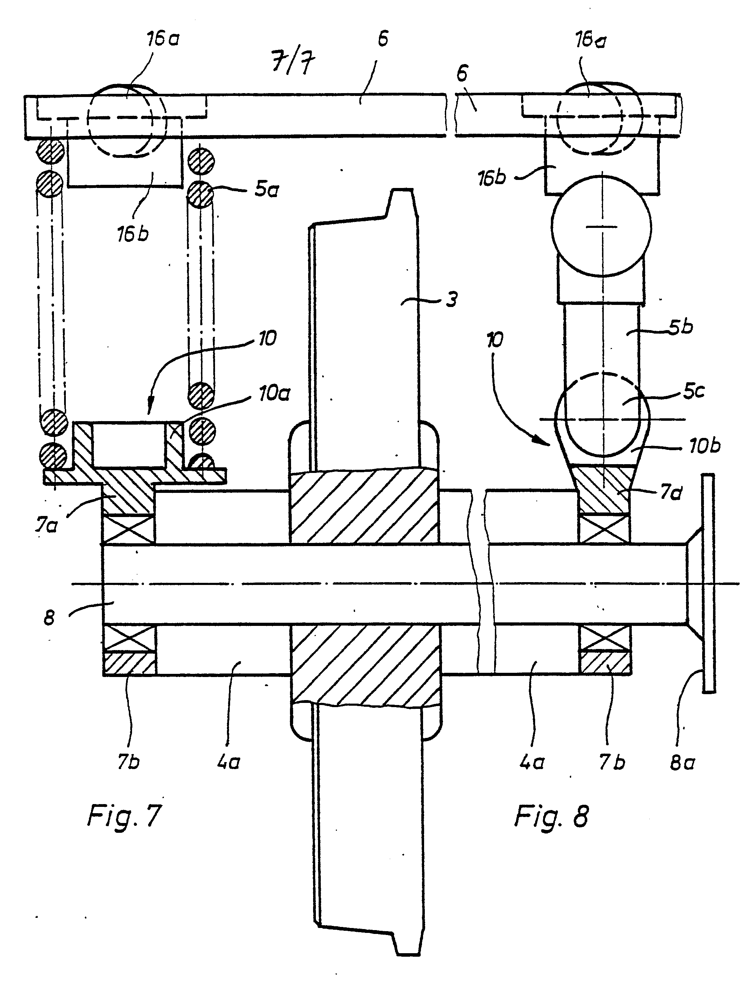

Die festen Gehäuseteile 7a der Lager 7 haben Aufnahmen 10 für Federn 5, die jeweils in der Vertikalachse eines Lagers 7 angeordnet und gegen einen oberen Schwenkrahmen 6 abgestützt sind. Bei dem mit Flexicoilfedern 5a als Federn 5 ausgerüsteten Drehgestell nach den Fig. 1 bis 3 und 7 bestehen die Aufnahmen 10 für eine Zentrierung der Flexicoilfedern 5a jeweils aus einem Ansatz 10a (siehe Fig. 7). Nur in Fig. 2 gezeigte Vertikaldämpfer 21 sind parallel zu den Flexicoilfedern 5a zwischen dem Führungsrahmen 1 und dem Schwenkrahmen 6 befestigt. Das Drehgestell nach den Fig. 4 bis 6 und 8 hat als Federn 5 hydro-pneumatische Federn 5b, welche auch die Funktion der vorgenannten Vertikaldämpfer 21 ausüben. Wie aus Fig. 8 ersichtlich, wird jede hydro-pneumatische Feder 5b über ein Lagerauge 5c durch einen an dem festen Gehäuseteil 7a des Lagers 7 ausgebildeten gabelförmigen Ansatz 10b der Aufnahme 10 gehalten.

In der Vertikalachse einer jeden Feder 5a oder 5b befinden sich durch den oberen Schwenkrahmen 6 verbundene Tragkörper 16, die aus einem Gehäuse 16b und einer darin gelagerten Rolle 16a bestehen. Die Rollen 16a wirken mit Laufflächen am Fahrzeugaufbau zusammen, die durch gummigefederte, segmentförmig ausgeführte Zwischenstücke 17 gebildet sind.

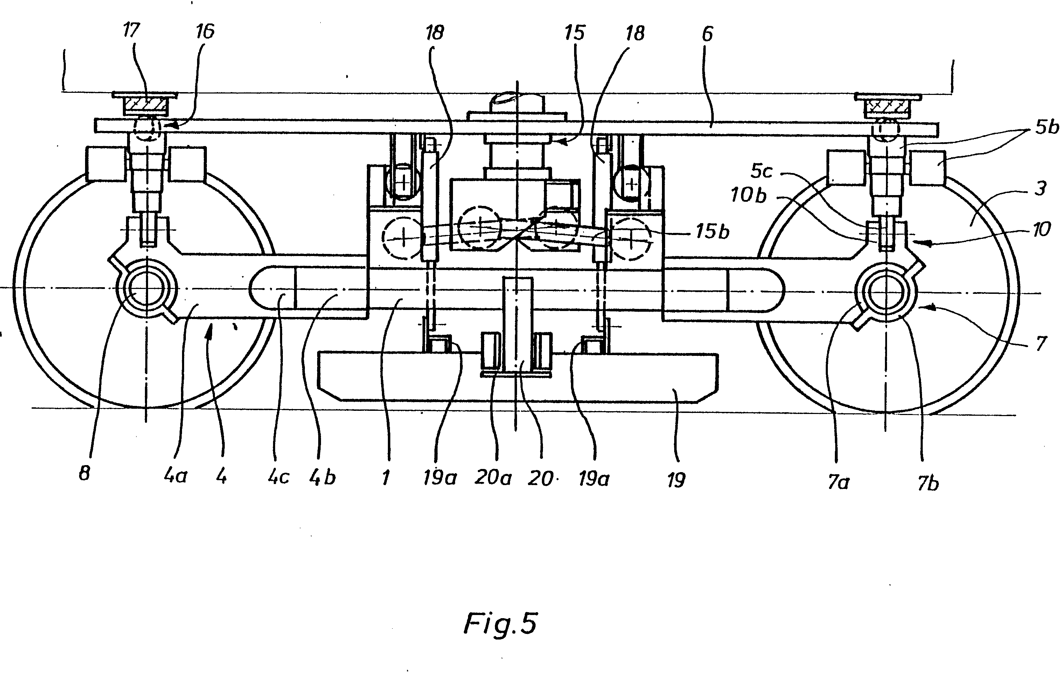

Der Schwenkrahmen 6 ist mit dem Fahrzeugaufbau über eine in der vertikalen Mittelachse der gezeigten Drehgestelle angeordnete Lagerung 15 horizontal drehbar verbunden. Diese Lagerung 15 bestimmt den Schwenkradius für die Rollen 16a der Tragkörper 16 und dient der Übertragung von Längs- und Querkräften. Bei dem Drehgestell nach dem ersten Ausführungsbeispiel gelangen die Längskräfte über Lenker 22 (siehe Fig. 2) und die Querkräfte über die Flexicoilfedern 5a mit parallel geschalteten Querdämpfern 23 (siehe Fig. 1 und 3) von dem Führungsrahmen 1 auf den Schwenkrahmen 6 und damit in die Lagerung 15. Bei dem Drehgestell nach dem zweiten Ausführungsbeispiel ist die Lagerung 15 zur Ausbildung einer Tiefanlenkung (siehe Fig. 4 und 5) entsprechend nach unten verlängert, mit einem Querhaupt 15a versehen und über Kuppelarme 15b mit dem Führungsrahmen 1 verbunden ; auftretende Querkräfte werden über hydro-pneumatische Bauteile 24 (siehe Fig. 4 und 6) übertragen.

Aus den Fig. 1 und 4 ist ersichtlich, daß die Arme 4a jeder Halterung 4 zur Aufnahme einer an dem entsprechenden Rad 3 angreifenden Scheibenbremsanordnung ausgebildet sind. Dazu ist an dem Gabelkopf 4b eine Lagerstelle 12 als Festpunkt für ein Zangenbremspaar 13 angeordnet. Ausnehmungen 4c (siehe auch Fig. 2 und 5) in den Armen 4a dienen dem Durchtritt und der Führung des Zangenbremspaares 13. Das Bezugszeichen 13a symbolisiert einen am Zangenbremspaar 13 angreifenden Antrieb. Bei beiden gezeigten Drehgestellen können als weiteres Bremssystem Schienenbremskörper 19 vorgesehen werden, wie dies insbesondere Fig. 5 zeigt. Die an den beiden Längsseiten des Drehgestelles angeordneten Schienenbremskörper 19 sind durch Querträger 19a miteinander verbunden und über daran angreifende Hydraulikzylinder 18 höhenverstellbar an dem abgefederten Schwenkrahmen 6 aufgehängt. Außerdem ist jeder Schienenbremskörper 19 in einem am unteren Führungsrahmen 1 angeschlossenen Übertragungsteil 20 höhenverschiebbar geführt. Das Übertragungsteil 20 ist als Abreißsicherung für den Schienenbremskörper 19 ausgebildet und dazu im Ausführungsbeispiel mit einem unteren Flansch 20a versehen.

**Patentansprüche**

1. Drehgestell für Schienenfahrzeuge, insbesondere für hohe, Geschwindigkeiten, im wesentlichen bestehend aus einem unteren verwindungsfähig gestalteten, die Lager (7) von Radsätzen (2) verbindenden Führungsrahmen (1), oberhalb dieser Lager (7) angeordneten Federn (5), auf denen der Fahrzeugaufbau unter Zwischenschaltung von durch einen oberen Schwenkrahmen (6) verbundenen Tragkörpern (16) um eine vertikale Achse drehbar abgestützt ist, wobei zwischen dem Führungsrahmen (1) und dem Schwenkrahmen (6) Elemente zur Übertragung von Längs- und Querkräften angeordnet sind, dadurch gekennzeichnet, daß am Führungsrahmen (1) zum Führen des Radsatzes (2) dessen Räder (3) jeweils mit zwei Armen (4a) gabelförmig umgreifende Halterungen (4) befestigt sind, daß die beiden Arme (4a) jeder Halterung (4) zur Aufnahme von Lagern (7) für ein radfestes, sich längenmäßig nur entsprechend dem Abstand dieser Lager (7) erstreckendes Tragteil (8) ausgebildet sind, daß jedes Lager (7) über eine in seiner Vertikalachse angeordnete Feder (5) gegen den Schwenkrahmen (6) abgestützt ist, und daß die gabelförmige Halterung (4) über einen deren beide Arme (4a) verbindenden Gabelkopf (4b) unter Zwischenschaltung eines elastischen Verbindungselementes (11), beispielsweise einer Gummibuchse, an dem Führungsrahmen (1) angeschlossen ist.

2. Drehgestell nach Anspruch 1, dadurch gekennzeichnet, daß die Lager (7) für die radfesten Tragteile (8) jeweils aus einem an den Armen (4a) der Halterungen (4) ausgebildeten festen Gehäuseteil (7a) und aus einem lösbaren Gehäuseteil (7b) bestehen, wobei die zwischen dem festen Gehäuseteil (7a) und dem lösbaren Gehäuseteil (7b) vorhandene Trennstelle in bezug auf die vertikale Querebene des Lagers (7) derart geneigt angeordnet ist, daß an dem festen Gehäuseteil (7a) eine Aufnahme (10) für die in Vertikalachse des Lagers (7) befindliche Feder (5) anbringbar ist.

3. Drehgestell nach Anspruch 1 oder 2, bei dem die gegen den Schwenkrahmen (6) abgestützten Federn (5) Flexicoilfedern (5a) sind, dadurch gekennzeichnet, daß die Arme (4a) der gabelförmigen Halterung (4) bzw. die an den Armen (4a) ausgebildeten festen Gehäuseteile (7a) der Lager (7) mit einem eine Zentrierung für die jeweilige Flexicoilfeder (5a) erbringenden Ansatz (10a) versehen sind.

4. Drehgestell nach Anspruch 1 oder 2, bei dem die gegen den Schwenkrahmen (6) abgestützten Federn (5) hydro-pneumatische Federn (5b) sind, dadurch gekennzeichnet, daß die Arme (4a) der gabelförmigen Halterung (4) bzw. die an den Armen (4a) ausgebildeten festen Gehäuseteile (7a) der Lager (7) einen gabelförmigen Ansatz (10b) zum Befestigen eines Lagerauges (5c) der jeweiligen hydro-pneumatischen Feder (5b) aufweisen.

5. Drehgestell nach einem der Ansprüche 1 bis 4, dadurch gekennzeichnet, daß die gabelförmige Halterung (4) zur Aufnahme einer an dem entsprechenden Rad (3) angreifenden Scheibenbremsanordnung ausgebildet ist.

6. Drehgestell nach Anspruch 5, dadurch gekennzeichnet, daß an dem Gabelkopf (4b) der Halterung (4) eine Lagerstelle (12) als Festpunkt für ein im Bereich der Horizontalachse des Rades (3) angreifendes Zangenbremspaar (13) angeordnet ist, wobei die Arme (4a) der Halterung (4) jeweils mit einer dem Durchtritt und der Abstützung des Zangerbremspaares (13) dienenden Ausnehmung (4c) versehen sind.

7. Drehgestell nach einem der Ansprüche 1 bis 6, dadurch gekennzeichnet, daß der Führungsrahmen (1) aus zwei winkelförmig ausgelegten, untereinander gleichen Rahmenteilen (1a und 1b) besteht, die über entsprechend der geforderten Verwindungsfähigkeit gestaltete Gelenke (14) miteinander verbunden sind.

8. Drehgestell nach einem der Ansprüche 1 bis 7, dadurch gekennzeichnet, daß die Tragkörper (16) in Vertikalachse einer jeden Feder (5) angeordnet sind.

9. Drehgestell nach Anspruch 8, dadurch gekennzeichnet, daß zwischen dem Fahrzeugaufbau und den Tragkörpern (16) jeweils gummigefederte Zwischenstücke (17) angeordnet sind.

10. Drehgestell nach Anspruch 9, dadurch gekennzeichnet, daß die gummigefederten Zwischenstücke (17) segmentförmig ausgeführt sind.

11. Drehgestell nach Anspruch 1, dadurch gekennzeichnet, daß an dem Schwenkrahmen (6) in Dreipunkt-Anordnung Hydraulikzylinder (18) zur höhenverstellbaren Aufhängung von miteinander verbundenen Schienenbremskörpern (19) angelenkt sind.

12. Drehgestell nach Anspruch 11, dadurch gekennzeichnet, daß jeder Schienenbremskörper (19) in einem am Führungsrahmen (1) angeschlossenen Übertragungsteil (20) für die auftretenden Bremskräfte höhenverschiebbar geführt ist, wobei das Übertragungsteil (20) als Abreißsicherung für den Schienenbremskörper (19) ausgebildet ist.

13. Drehgestell nach Anspruch 1, dadurch gekennzeichnet, daß die Tragteile (8) an ihren zur Drehgestellängsmitte hin weisenden Enden (8a) für den Anschluß eines gegenseitigen Verbindungsstückes (9), z. B. eines dünnwandigen Distanzrohres, Getriebes oder einer Bremse, eingerichtet sind.

## Claims

1. A bogie for rail vehicles, in particular for high speeds, essentially comprising a lower guide frame (1) which is designed to be torsionable and which joins the bearings (7) of sets (2) of wheels, springs (5) which are disposed above the said bearings (7) and on which the vehicle body is supported so as to be pivotable about a vertical axis with the interposition of supporting members (16) connected by an upper swivel frame (6), elements for transmitting longitudinal and transverse forces being arranged between the guide frame (1) and the swivel frame (6), characterized in that in order to guide the wheel set (2), holding means (4) are secured to the guide frame (1), two arms (4a) of these holding means (4) embracing the wheels (3) in the manner of forks, the two arms (4a) of each holding means (4) are designed to receive bearings (7) for a support part (8) which is rigid with the wheel and which extends longitudinally only in accordance with the distance between the said bearings (7), each bearing (7) is supported against the swivel frame (6) by way of a spring (5) provided in its vertical axis, and the fork-like holding means (4) is connected to the guide frame (1) by way of a forkhead (4b) joining the two arms (4a) thereof while a resilient connexion element (11), for example a rubber sleeve, is interposed.

2. A bogie according to Claim 1, characterized in that the bearings (7) for the support parts (8) rigid with the wheels each comprise a rigid housing part (7a) formed on the arms (4a) of the holding means (4) and a detachable housing part (7b), the separation point provided between the rigid housing part (7a) and the detachable housing part (7b) being arranged inclined with respect to the vertical transverse plane of the bearing (7) in such a way that a receiving means (10) for the spring (5) provided in the vertical axis of the bearing (7) can be attached to the rigid housing part (7a).

3. A bogie according to Claim 1 or 2, in which the springs (5) supported against the swivel frame (6) are flexicoil springs (5a), characterized in that the arms (4a) of the fork-like holding means (4) or the rigid housing parts (7a) of the bearings (7) formed on the arms (4a) are provided with an projection (10a) providing a centring for the respective flexicoil spring (5a).

4. A bogie according to Claim 1 or 2, in which the springs (5) supported against the swivel frame (6) are hydro-pneumatic springs (5b), characterized in that the arms (4a) of the fork-like holding means (4) or the rigid housing parts (7a) of the bearings (7) formed on the arms (4a) comprise a fork-like projection (10b) for securing a bearing lug (5c) of the respective hydro-pneumatic spring (5b).

5. A bogie according to any one of Claims 1 to 4, characterized in that the fork-like holding means (4) is constructed for receiving a disc brake arrangement acting upon the corresponding wheel (3).

6. A bogie according to Claim 5, characterized in that a bearing point (12) is provided on the fork head (4b) of the holding means (4) as a fixed point for a pair (13) of double jaw brakes which engage in the region of the horizontal axis of the wheel (3), the arms (4a) of the holding means (4) each being provided with a recess (4c) serving for the passage and the support of the pair (13) of double jaw brakes.

7. A bogie according to any one of Claims 1 to 6, characterized in that the guide frame (1) comprises two angularly designed frame parts (1a and 1b) which are similar to one another and which are connected to one another by way of joints (14) designed in accordance with the required torsion ability.

8. A bogie according to any of Claims 1 to 7, characterized in that the supporting members (16) are arranged in the vertical axis of each spring (5).

9. A bogie according to Claim 8, characterized in that rubber-sprung intermediate members (17) are arranged in each case between the vehicle body and the supporting members (16).

10. A bogie according to Claim 9, characterized in that the rubber-sprung intermediate members (17) are constructed in the form of segments.

11. A bogie according to Claim 1, characterized in that hydraulic cylinders (18) for the vertically adjustable suspension of mutually joined rail brake members (19) are articulated on the swivel frame (6) in a three-point arrangement.

12. A bogie according to Claim 11, characterized in that each rail brake member (19) is guided vertically adjustable in a transfer part (20) joined to the guide frame (1) for the braking forces which occur, the transfer part (20) being constructed as a means for preventing the rail brake member (19) from breaking off.

13. A bogie according to Claim 1, characterized in that the support parts (8) are set up at their ends (8a) facing the longitudinal centre of the bogie for attaching a mutual connexion member (9), e. g. a thin-walled distance tube, transmission or brake.


**Revendications**

1. Bogie pour véhicules ferroviaires, en particulier pour grandes vitesses, essentiellement formé d'un cadre de guidage (1) inférieur conçu de manière à pouvoir se tordre, reliant les paliers (7) d'essieux montés (2), de ressorts (5) disposés au-dessus de ces paliers (7), sur lesquels la superstructure du véhicule est soutenue, avec interposition de corps porteurs (16) reliés par un cadre pivotant supérieur (6), de manière à pouvoir tourner autour d'un axe vertical, des éléments pour la transmission de forces longitudinales et transversales étant disposés entre le cadre de guidage (1) et le cadre pivotant (6), caractérisé en ce que sur le cadre de guidage (1) sont fixées, pour le guidage de l'essieu monté (2), des montures (4) entourant les roues (3) de celui-ci, chacune par deux bras (4a), à la façon d'une fourche, en ce que les deux bras (4a) de chaque monture sont conçus pour recevoir des paliers (7) pour une partie porteuse (8) solidaire des roues s'étendant seulement, en longueur, conformément à l'espacement de ces paliers (7), en ce que chaque palier (7) est soutenu contre le cadre pivotant (6) par l'intermédiaire d'un ressort (5) disposé dans son axe vertical, et en ce que la monture en forme de fourche (4) est raccordée au cadre de guidage (1) par l'intermédiaire d'une tête de fourche (4b) reliant ses deux bras (4a) avec interposition d'un élément élastique de liaison (11), par exemple d'une douille en caoutchouc.

2. Bogie selon la revendication 1, caractérisé en ce que les paliers (7) pour les parties porteuses (8) solidaires des roues sont formés chacun d'une partie de carter fixe (7a) constituée sur les bras (4a) des montures (4) et d'une partie de carter détachable (7b), l'endroit de séparation qui existe entre la partie de carter fixe (7a) et la partie de carter détachable (7b) étant disposé de façon inclinée relativement au plan transversal vertical du palier (7), de telle sorte que sur la partie de carter fixe (7a) peut être disposé un logement (10) pour le ressort (5) situé dans l'axe vertical du palier (7).

3. Bogie selon l'une des revendications 1 et 2, dans lequel les ressorts (5) appuyés contre le cadre pivotant (6) sont des ressorts « Flexicoil » (5a), caractérisé en ce que les bras (4a) de la monture en forme de fourche (4) ou les parties de carter fixes (7a) des paliers (7), constituées sur les bras (4a) sont munis d'un appendice (10a) assurant un centrage pour le ressort « Flexicoil » dont il s'agit.

4. Bogie selon l'une des revendications 1 et 2, dans lequel les ressorts (5) soutenus contre le cadre pivotant (6) sont des ressorts hydropneumatiques (5b), caractérisé en ce que les bras (4a) de la monture en forme de fourche (4) ou les parties de carter fixes (7a) des paliers (7), constituées sur les bras (4a), présentent un appendice en forme de fourche (10b) pour la fixation d'un œillet de palier (5c) du ressort hydropneumatique (5b) dont il s'agit.

5. Bogie selon l'une des revendications 1 à 4, caractérisé en ce que la monture en forme de fourche (4) est constituée pour loger un dispositif de frein à disque agissant sur la roue correspondante (3).

6. Bogie selon la revendication 5, caractérisé en ce que sur la tête de fourche (4b) de la monture (4) est disposé un point d'appui (12) en tant que point fixe pour une paire de freins à mâchoires (13) agissant dans la région de l'axe horizontal de la roue (3), les bras (4a) de la monture (4) étant munis chacun d'un évidement (4c) servant au passage et au soutien de la paire de freins à mâchoires (13).

7. Bogie selon l'une des revendications 1 à 6, caractérisé en ce que le cadre de guidage (1) est formé de deux parties de cadre (1a et 1b) semblables entre elles, constituées en forme d'équerre, qui sont reliées entre elles par l'intermédiaire d'articulations (14) conçues conformément à l'aptitude de torsion exigée.

8. Bogie selon l'une des revendications 1 à 7, caractérisé en ce que les corps porteurs (16) sont disposés dans l'axe vertical de chacun des ressorts (5).

9. Bogie selon la revendication 8, caractérisé en ce qu'entre la superstructure du véhicule et chacun des corps porteurs (16) sont disposées des pièces intermédiaires (17) suspendues par caoutchouc.

10. Bogie selon la revendication 9, caractérisé en ce que les pièces intermédiaires suspendues par caoutchouc (17) sont exécutées en forme de secteur.

11. Bogie selon la revendication 1, caractérisé en ce qu'au cadre pivotant (6) sont articulés, en une disposition à trois points, des vérins hydrauliques (18) pour la suspension réglables en hauteur de corps de frein sur rail (19) reliés entre eux.

12. Bogie selon la revendication 11, caractérisé en ce que chaque corps de frein sur rail (19) est guidé de manière à pouvoir coulisser en hauteur dans une partie de transmission (20) des forces de freinage qui se produisent, raccordée au cadre de guidage, la partie de transmission (20) étant conçue sous forme de sécurité contre l'arrachement du corps de frein sur rail (19).

13. Bogie selon la revendication 1, caractérisé en ce que les parties porteuses (8) sont agencées, à leurs extrémités (8a) tournées vers le milieu longitudinal du bogie, pour le raccordement d'une pièce de liaison mutuelle (9), par exemple d'un tube d'espacement à paroi mince, d'une transmission ou d'un frein.

*Fig.1*

0 050 727

Fig. 2

*Fig. 3*

Fig. 4

0 050 727

*Fig.5*

*Fig. 6*

0 050 727

7/7

Fig. 7

Fig. 8